# NEUE EUROPÄISCHE PATENTSCHRIFT

(11) **EP 2 953 778 B2**
(45) Veröffentlichungstag und Bekanntmachung des Hinweises auf die Entscheidung über den Einspruch: **17.01.2024**
(45) Hinweis auf die Patenterteilung: 17.07.2019
(21) Anmeldenummer: 14728825.2
(22) Anmeldetag: 13.05.2014
(51) Int. Cl.: B29C 45/76

(54) **VERFAHREN ZUM BETREIBEN EINER MASCHINE ZUR VERARBEITUNG VON KUNSTSTOFFEN**
METHOD FOR OPERATING A MACHINE FOR PROCESSING PLASTICS
PROCÉDÉ PERMETTANT DE FAIRE FONCTIONNER UNE MACHINE DE TRAITEMENT DE MATIÈRES PLASTIQUES

(30) Priorität: 15.05.2013 DE 102013008245
(43) Veröffentlichungstag der Anmeldung: 16.12.2015
(73) Patentinhaber: Arburg GmbH + Co KG, 72290 Loßburg (DE)
(72) Erfinder: KRAIBÜHLER, Herbert, 72290 Lossburg (DE); DUFFNER, Eberhard, 72181 Starzach (DE)
(74) Vertreter: RPK Patenanwälte Reinhardt und Kaufmann Partnerschaft mbB (Pforzheim)
(86) Internationale Anmeldenummer: PCT/EP2014/001283
(87) Internationale Veröffentlichungsnummer: WO 2014/183863

(56) Entgegenhaltungen:
- EP-A1- 0 573 912
- EP-A2- 0 699 514
- EP-A2- 2 380 709
- DE-A1- 4 025 221
- DE-A1- 4 025 221
- DE-A1-102009 000 938
- US-A- 5 900 259
- US-A1- 2002 019 674
- US-A1- 2002 019 674
- US-A1- 2009 204 249
- US-A1- 2012 059 637
- US-A1- 2013 103 184
- US-B2- 6 546 311
- US-B2- 6 546 311
- US-B2- 6 658 319
- MICHAELI W ET AL: "GEZIELTE SPRITZGIESS-MACHINENEINSTELLUNG DURCH SIMULATIONSERGEBNISSE, TEIL 1. ÖSELECTIVE INJECTION MOULDING MACHINE SETTING USING SIMULATION RESULTS. PART 1", PLASTVERARBEITER, HUETHIG GMBH, HEIDELBERG, DE, Bd. 45, Nr. 8, 1. August 1994 (1994-08-01) , Seiten 30-32,34, XP000486423, ISSN: 0032-1338
- BEEVERS A: "INJECTION CONTROL GETS SMART", EUROPEAN PLASTICS NEWS, EMAP BUSINESS PUBLICATION, LONDON, GB, Bd. 22, Nr. 9, 1. September 1995 (1995-09-01), Seite 65/66, XP000541527, ISSN: 0306-3534
- MICHAELI W., HOHENAUER K., BREUER P.: "GEZIELTE SPRITZGIESS-MACHINENEINSTELLUNG DURCH SIMULATIONSERGEBNISSE, TEIL 1. SELECTIVE INJECTION MOULDING MACHINE SETTING USING SIMULATION RESULTS. PART 1.", PLASTVERARBEITER., HUETHIG GMBH, HEIDELBERG., DE, vol. 45., no. 08., 1 August 1994 (1994-08-01), pages 30-32 + 34., DE ISSN: 0032-1338

## Beschreibung

Die Erfindung betrifft ein Verfahren zum Betreiben einer Maschine zur Verarbeitung von Kunststoffen und anderer plastifizierbarer Materialien nach dem Oberbegriff des Anspruches 1.

Ein derartiges Verfahren ist aus der EP 0 573 912 B1 bekannt. In einer Datenverarbeitungseinheit der Maschinensteuerung befindet sich dort ein Basiswissen über den Betrieb einer Spritzgießmaschine und ihrer Peripheriegeräte. Die Maschine bietet dem Maschineneinsteller einen Ablaufeditor zur Erzeugung eines Maschinenablaufs an. Aufgrund der in der Datenverarbeitungseinheit vorhandenen Kenntnisse über Abläufe und Maschine wird bei der Eingabe dem Bediener stets nur eine selektierte Auswahl an Eingabemöglichkeiten visuell auf einer Bildschirmoberfläche zur Verfügung gestellt, die in die bereits bestehenden Teile des bereits bestehenden Ablaufs seitens Maschine und Spritzgießwerkzeug kompatibel einfügbar sind. Dadurch wird die Eingabe von Arbeitsabläufen vereinfacht und erleichtert.

Aus der US 6,546,311 B2 ist es bekannt, an einer Spritzgießmaschine an Hand von gefertigten Spritzteilen physikalische charakteristische Eigenschaften zu messen und diese zusammen mit ermittelbaren Prozessparametern Optimierern zuzuführen. Diese Optimierer bestimmen daraus Maschinenvoreinstellungen für die nachfolgende Fertigung. Die Messungen an den Spitzteilen können inline oder offline erfolgen, in jedem Fall sind jedoch zunächst Teile zu fertigen, bevor Einstelldaten für die Maschine gewonnen werden können.

Aus der WO 2010/057231 A1 ist ein Einstellverfahren zur Einstellung einer prozessfähigen Grundeinstellung für eine Spritzgießmaschine zur Verarbeitung von Kunststoffen bekannt. Mittels eines in der Steuerung integrierten, interaktiven Anfahrassistenten wird ein Bediener schrittweise durch Teilabschnitte des Einstellprozesses geleitet. Dabei werden Werte für systemrelevante Prozessparameter ermittelt, so dass rasch und zuverlässig eine Grundeinstellung erzielt wird. Zu Beginn einer Versuchsphase werden relevante Parameter wie die Fließeigenschaften der Formmasse, Einspritzgeschwindigkeit oder Massetemperatur vorläufig festgelegt und daraus eine Kenngröße für das Fließverhalten ermittelt. Anhand dieser Kenngröße erfolgt die weitere Grundeinstellung.

Aus der US 6,546,311 B2 ist ein Verfahren bekannt, bei dem bereits von der Maschine gefertigte Bauteile vermessen und auf ihre physikalischen Eigenschaften überprüft werden. Dabei erfolgt eine Zuordnung zu mehreren Prozessparametern wie Düsendruck und Düsentemperatur. Auf der Basis dieser Informationen erfolgt dann eine Optimierung des bereits bestehenden Spritzgießablaufes. Damit muss zunächst eine Grundeinstellung eines Spritzgießprozesses programmiert sein, bevor dieser Optimierungsprozess stattfinden kann.

Aus der US 5,900,259 A ist ein Verfahren bekannt, bei dem eine Optimierung der Spritzgießbedingungen durch eine Kunststoffflussanalyse an einem virtuellen Modell des Spritzteils erfolgt. Es erfolgt eine Simulation des Spritzteils, wobei Form, Hohlraum und Anguss oder auch die Materialeigenschaften vorbekannt sein können. Die Bestimmung des Spritzgießprozesses erfolgt damit anhand von Flussanalysen, die an einem simulierten Bauteil vorgenommen werden. Die Kunststoffflussanalyse bestimmt damit das Formdesign, das heißt Startpunkt sind nicht die Geometriedaten des Bauteils.

Aus der US 6, 658,319 B2 ist ein weiteres Verfahren bekannt, bei dem virtuell ein Optimierungsprozess der Spritzgießbedingungen durchgeführt wird. Zuvor wird allerdings unter vorläufigen Spritzgießbedingungen ein Bauteil hergestellt, um aktuelle Profildaten hinsichtlich des Drucks und der Spritzgießbedingungen zu erhalten. Mit anderen Worten wird also die Maschine spritzgießbereit voreingestellt und dann eine Optimierung des Spritzgießprozesses zur Erzielung geeigneter guter Spritzteile durchgeführt. Damit ist der Bediener gefordert, zunächst eine Grundeinstellung der Maschine herzustellen.

Aus der DE 10 2011 016 712 A1 ist für die Verwendung an einer Spritzgießmaschine ein berührungsempfindlicher Bildschirm vorbekannt, der bei Berührung der Bedienoberfläche die Eingabe ermöglicht.

Den im Stand der Technik bekannten Verfahren ist gemeinsam, dass meist insgesamt, zumindest aber teilweise Parameter oder Parametergrößen wie Geschwindigkeit, Druck, Volumen, Temperatur individuell durch Programmierung der Steuerung vorgegeben werden, so dass grundsätzlich der Maschineneinrichter als Experte gefordert ist.

Aus der EP 0 699 514 A2 ist ein Verfahren zum Betreiben einer Maschine zur Verarbeitung von Kunststoffen bekannt. Die Maschine weist eine Formöffnungs- und -schließeinheit zum Öffnen und Schließen einer Spritzgießform mit wenigstens einem Formhohlraum zur Herstellung eines der Form des Formhohlraumes entsprechenden Spritzteils, eine Spritzgießeinheit mit Mitteln zum Plastifizieren und zum Einspritzen des plastifizierbaren Materials in den Formhohlraum, und eine Steuerung der Maschine, in der ein Expertenwissen über den Betrieb der Spritzgießmaschine und ihre eventuell vorhandenen Peripheriegeräte sowie über die Herstellung von Spritzteilen in der Spritzgießtechnik in Form von Maschinen-, Werkstoff- und Werkzeugparametern vorhanden ist, um ein Spritzteil unter bedarfsweise interaktivem Kontakt mit einem Bediener an Hand von Spritzgießparametern herzustellen auf.

Das Verfahren umasst die Schritte:
- Bereitstellen von Informationen - nämlich der Wanddicke des Werkstücks im Angußbereich sowie der projizierten Fläche des Werkstücks - über eine Geometrie für ein Spritzteil oder des Formhohlraums an einen Formteilassistenten innerhalb der Steuerung,
- Berechnen von für die Herstellung des Spritzteils erforderlichen Anlagen- und Prozessparametern als Spritzgießparameter, dort "Einstellwerte genannt", durch den Formteilassistenten an der Maschine vor der erstmaligen Fertigung eines Spritzteils.

Ausgehend von diesem Stand der Technik liegt der Erfindung die Aufgabe zugrunde, einen steuerungsinternen Programmierer zur bedienerfreundlichen Einrichtung einer Maschine zur Verarbeitung von Kunststoffen zur Verfügung zu stellen.

Diese Aufgabe wird durch ein Verfahren mit den Merkmalen des Anspruches 1 gelöst.

Ausgangspunkt für die Einrichtung z.B. eines Spritzgießzyklus einer Kunststoff-Spritzgießmaschine sind dabei nicht mehr Parameter, die der Maschine vorgegeben werden, sondern Informationen über die Geometrie des Spritzteils als herzustellendes Bauteil oder des Formhohlraums in Form von 3D Daten als CAD-Datensatz, anhand derer die Steuerung der Spritzgießmaschine mit dem in sie softwaretechnisch integrierten Kenntnissen über Maschine und Grundregeln des Spritzgießens die grundsätzlich erforderlichen Anlagen- und Prozessparameter für einen Betrieb der Maschine ermitteln kann. Ausgangspunkt ist also das Bauteil. Im Ergebnis wird der Herstellungsprozess eines Spritzteils dadurch schwerpunktmäßig durch die Kenntnis der Geometrie des Teils und nicht durch das Fachwissen des Bedieners über die Maschine bestimmt. Während bisher beim Einrichten einer Maschine ein Dialog von Mensch in Richtung Maschine erfolgte, wird dadurch ein neuartiger Ansatz mit einem Dialog von Maschine zum Mensch als Bauteil- und Prozessexperte gefördert. Die Steuerung erstellt damit eine Grundeinstellung der Anlagen- und Prozessparameter auf der Basis der Geometriedaten des herzustellenden Spritzteils, wie es ein erfahrener Bediener versucht, wobei die Steuerung sogar darüber hinaus noch insgesamt den Prozess bereits optimiert. Dies ermöglicht es auch einem Nicht-Fachmann, die Maschine ohne Parameter-Setting so in Betrieb zu nehmen, dass ein Spritzteil mit den vorgegebenen Geometriedaten gefertigt werden kann, d.h. ohne offline Simulationsrechnungen oder Versuchsteile. Wesentlich ist, dass die Steuerung Geometriedaten über das Bauteil bzw. Spritzteil und damit 3D-Daten als CAD-Datensatz erhält, der es der Steuerung ermöglicht, ausgehend vom zu fertigenden Spritzteil Anlagen und Prozessparameter z.B. in Form eines Maschineneinstelldatensatzes zu bestimmen und einzustellen. In Verbindung mit den Materialinformationen ergeben sich damit Einstellparameter. die die Anwendung der Technologie, hier das Spritzgießen überhaupt ermöglichen, wozu ein grundsätzliches Expertenwissen erforderlich ist. Eine derartige Einstellung kann üblicherweise nur ein auf die spezifische Maschine trainierter Bediener ohne weiteres vornehmen.

Diese Berechnung der Technologiedaten und Prozessdaten erfolgt vor der erstmaligen Erstellung eines Spritzteils, wobei keine Simulation erforderlich ist und üblicherweise auch keine erfolgt, das heißt, es wird auch kein virtuelles Spritzteil geschaffen. Anhand der Geometrie kann zunächst das Volumen und bei Kenntnis des Materials das Gewicht des Spritzteils berechnet werden. Aus diesen Daten kann ein optimaler Anspritzpunkt bestimmt werden, woraus sich Fließwege und Wandstärke des Spritzteils ableiten lassen. Bedarfsweise kann dann auch der Anspritzpunkt, sofern die Form noch nicht erstellt ist, ebenfalls entsprechend beeinflusst werden. Mit der Berechnung von Fließwegen und Wandstärken lassen sich die erforderlichen Kühlzeiten und Drücke berechnen. Welche Temperatur erforderlich ist, ergibt sich aus dem zu verwendenden Material und den damit auch vorgegebenen Grenzwerten für dessen Verarbeitung. Damit ist eine Ureinstellung auf Basis der Geometrie des herzustellenden Bauteils an der Maschine zu bestimmen, wie sie üblicherweise nur ein erfahrener Bediener vornehmen kann. Der Bediener erhält als Ergebnis basierend auf den vorgegebenen Geometriedaten und Materialdaten Einstell-TechnologieDaten für die erstmalige Erstellung eines Spritzteils. Dazu werden die Bauteil-Informationen einem Formteilassistenten innerhalb der Steuerung übergeben, der daraus die einzustellenden Anlagen- und Prozessparameter berechnet.

Die so berechneten Parameter werden durch den Formteilassistenten auf Plausibilität überprüft, ob daraus ein Bauteil bzw. Spritzteil herzustellen ist, und schließlich als Einstellung übernimmt. Zur Plausibilitätsprüfung gehören auch die an der Maschine gegebenen Grenzen, wie z.B. Überschreiten möglicher Einspritzgeschwindigkeiten oder möglicher Fahrwege z.B. von Teilen der Formschließeinheit oder der Spritzgießform. Fehlen dem Formteilassistenten zur Herstellung noch Informationen, sucht er den interaktiven Kontakt mit dem Bediener, um weitere Informationen zu erhalten. Erhält er keine weiteren Informationen, teilt er dem Bediener mit, dass das Bauteil als Spritzteil unter den gegebenen Anlageneigenschaften bzw. Maschineneigenschaften und den mitgeteilten Bauteildaten eventuell so nicht herstellbar ist (z.B. könnte der Formteilassistent dem Bediener auch vorschlagen, eine Förderschnecke mit einem anderen Schneckendurchmesser auf die Anlage zu montieren). Weitere Informationen sind vorzugsweise das Material, das Einfluss auf das Fließverhalten und damit auf die Prozessparameter hat. Derartige Informationen bzw. Daten aus der Konstruktion sind aber vor allem auch die Geometrie des Spritzteils oder des Formhohlraums sowie die Anordnung der Angussgeometrie, um es dadurch dem Formteilassistenten zu ermöglichen, zum Beispiel Fließwege und Fließgeschwindigkeiten zu bestimmen. Bei vorgegebenen Geometriedaten kann der Formteilassistent aber auch den bei den gegebenen Randbedingungen optimalen Angusspunkt berechnen.

Ergänzend kann in einer bevorzugten Ausführungsform ein Spritzgießformassistent vorgesehen sein, der zusätzlich Betriebsparameter für den Betrieb einer bestimmten Spritzgießform ermittelt, die gemeinsam mit den Anlagen- und Prozessparametern erforderlich sind, um das vorgegebene Spritzteil auf der jeweiligen Spritzgießform auf dieser Spritzgießmaschine herzustellen. Auch hier wird eine Plausibilitätsprüfung gegebenenfalls mit weiterer interaktiver Kontaktaufnahme mit dem Bediener durchgeführt.

Ergänzend kann ein Qualitätsassistent vorgesehen sein, der insbesondere die geforderten Eigenschaften des herzustellenden Spritzteils und die zugehörigen Toleranzbereiche als Information verarbeitet, ergänzend abfragt und dadurch Anlagen- und Prozessparameter und/oder Betriebsparameter zur Stabilitätsoptimierung des Prozessablaufs beeinflusst.

Sämtliche Assistenten, d.h. Formteilassistent, Spritzgießformassistent und Qualitätsassistent, können für sich oder gemeinsam auch nur einem Abschnitt des Prozessablaufes, einem Anlagenteil der Spritzgießmaschine oder auch einer Teileigenschaft oder Teilgeometrie des Spritzteils zugeordnet werden, um einen möglichst optimalen Ablauf des Herstellungsprozesses auf der zugeordneten Produktionsanlage mit wenig erforderlichem Detailwissen des Bedieners über die Anlage zu erzeugen.

Weitere Vorteile ergeben sich aus den Unteransprüchen und der nachfolgenden Beschreibung eines bevorzugten Ausführungsbeispiels.

Im Folgenden wird die Erfindung anhand eines in den Figuren dargestellten Ausführungsbeispiels näher erläutert. Es zeigen:
- Fig. 1: eine schematische Darstellung von Spritzgießmaschine und zugehöriger Steuerung mit Bedieneinheit,
- Fig. 2: ein Ablaufdiagramm für das Einrichten und Parametrieren der Anlage unter Nutzung verschiedener Assistenten,
- Fig. 3: eine schematische Darstellung einer Gestik gesteuerten Bedienung.

Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Im Folgenden werden dabei die Begriffe Maschine und Anlage synonym für einander benutzt, sofern sich nicht aus der konkreten Beschreibung etwas Anderes ergibt. Ferner findet eine Unterscheidung zwischen dem gewünschten Bauteil als Ausgangspunkt und dem auf der Maschine/Anlage produziertem Spritzteil statt, das unter Einsatz des Verfahrens hergestellt werden soll.

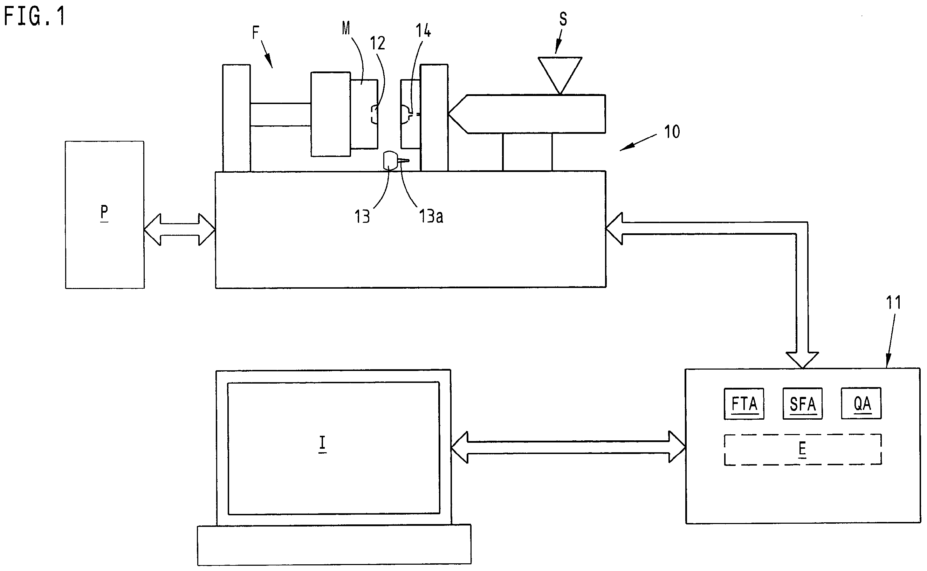

Figur 1 zeigt schematisch eine Maschine zur Verarbeitung von Kunststoffen und anderer plastifizierbarer Materialien wie pulverförmige und/oder keramische Massen. Die Spritzgießmaschine 10 weist eine Formschließeinheit F zum Öffnen und Schließen einer Spritzgießform M mit wenigstens einem Formhohlraum 12 zur Herstellung eines der Form des Formhohlraumes entsprechenden Spritzteils 13 auf. Dabei ist in Fig. 1 die Spritzgießform M geöffnet und das Spritzteil 13 ggf. mit seinem Anguss 13a aus dem Formhohlraum 12 ausgestoßen. Erkennbar ist zudem die Angussgeometrie 14 des Formhohlraumes 12, über die plastifizierbares Material von einer Spritzgießeinheit S dem Formhohlraum 12 zugeführt wird.

Der Spritzgießmaschine 10 zugeordnet ist eine Steuerung 11, in der ein Expertenwissen E über den Betrieb der Spritzgießmaschine und ihre eventuell vorhandenen Peripheriegeräte P sowie Grundregeln über die Herstellung von Spritzteilen 13 in der Spritzgießtechnik vorhanden ist. Unter Verwendung dieses Expertenwissens kann ein Spritzteil 13 bedarfsweise nach interaktivem Kontakt mit einem Bediener anhand von Spritzgießparametern hergestellt werden. Für den interaktiven Kontakt mit dem Bediener ist eine Mensch-Maschine-Schnittstelle I vorgesehen, die z.B. durch einen Bildschirm mit Tastatur, einem (Multi)Touchscreen oder auch andere geeignete Mittel, wie z.B. Spracheingabe, zur Verfügung gestellt wird.

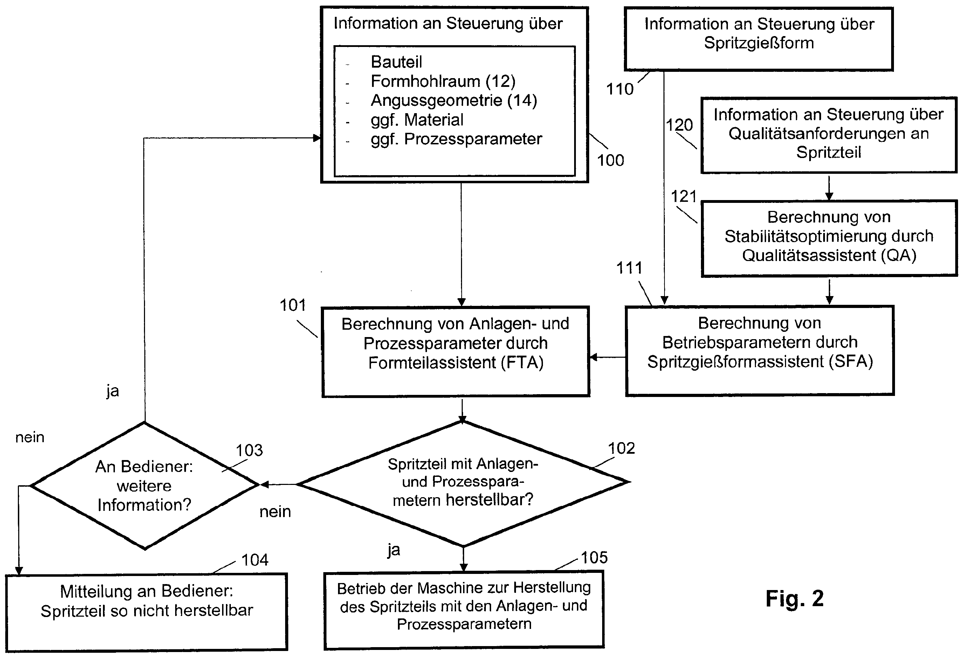

Fig. 2 zeigt den Ablauf des Verfahrens. Zu Beginn des Verfahrens erhält die Steuerung im Schritt 100 Informationen über das Spritzteil oder den Formhohlraum 12, das bzw. in dem das Spritzteil 13 herzustellen ist. Diese Informationen sind 3D-Daten als CAD-Datensatz in einem Datenformat, das der Steuerung 10 bekannt ist und von ihr verarbeitet werden kann. Aus den so in Schritt 100 ermittelten Informationen berechnet die Spritzgießmaschine in Schritt 101 mit dem Expertenwissen/Modellrechner E die für die Herstellung des Spritzteils erforderliche Anlagen- und Prozessparameter, wobei vorzugsweise im Anschluss an diese Berechnung auch die Spritzgießmaschine mit den so ermittelten Spritzgießparametern gemäß Schritt 105 betrieben wird. Es ist also nicht erforderlich, einzelne Parameter oder Parametergrößen wie Geschwindigkeiten, Drücke, Mengen, Temperaturen usw. individuell für den Herstellungsprozess zu programmieren, sondern stattdessen ermittelt die Steuerung anhand des herzustellenden Teils, welche Schritte zur Herstellung dieses Teils unter Verwendung welcher Anlagen- und Prozessparameter erforderlich sind.

Hierzu wird ein Formteilassistent FTA innerhalb der Steuerung 11 eingesetzt. Diesem werden die Informationen über das Spritzteil 13 im Schritt 100 zur Verfügung gestellt, so dass er im Schritt 101 die Spritzgießparameter als Anlagen- und Prozessparameter berechnen kann. Der Formteilassistent prüft dann die so ermittelten Spritzgießparameter auf Plausibilität, d.h. darauf, ob mit diesen Spritzgießparametern ein Spritzteil 13 mit den vorgegebenen Bauteil-Informationen auf der Spritzgießmaschine 10 herzustellen ist. Das Ergebnis dieser in Schritt 102 dargestellten Abfrage lautet entweder, dass das Teil herzustellen ist, worauf der Betrieb der Maschine gemäß Schritt 105 zur Herstellung des Spritzteils erfolgt. Ist das Spritzteil mit diesen Informationen nicht herzustellen, erfolgt eine Interaktion mit dem Bediener, d.h. über die Mensch-Maschine-Schnittstelle I wird der Bediener aufgefordert, weitere Informationen zur Verfügung zu stellen, die eine Herstellung des Spritzteils 13 gegebenenfalls unter Änderung der Anlagen- und Prozessparameter oder auch Komponenten der Anlage ermöglichen. Kann der Bediener bei der Abfrage im Schritt 103 weitere Informationen zur Verfügung stellen, werden die Schritte 100 bis 102 wiederholt. Kann der Bediener keine weiteren Informationen zur Verfügung stellen, wird dem Bediener in Schritt 104 mitgeteilt, dass das Bauteil als Spritzteil mit den in diesem Optimierungsschritt verfügbaren Daten, Modellen und Anlagenkomponenten so nicht oder nur eingeschränkt herstellbar ist. Unter Umständen können dem Bediener Vorschläge gemacht werden, was anlagenspezifisch zu ändern ist. um das Spritzteil dennoch herstellen zu können.

Derartige weitere Informationen können z.B. Informationen über das zu verarbeitende Material sein, wobei das Material entweder der Steuerung vorgegeben wird oder vom Bediener das zu verarbeitende Material aus einer vorhandenen, der Steuerung 11 bekannten Auswahl an Materialien ausgewählt wird. Diese Information wird ebenfalls zur Berechnung der Anlagen- und Prozessparameter im Schritt 101 verwendet. Insbesondere werden dem Formteilassistenten jedoch die Informationen über die Geometrie des herzustellenden Spritzteils 13 oder des Formhohlraums 12 mitgeteilt. Zu diesen Informationen gehört vorzugsweise auch die Angussgeometrie 14, da in Kenntnis der Angussgeometrie 14 die Steuerung 11 mit ihrem Expertenwissen und Modellrechnern E aus der Geometrie des Spritzteils 13 die Fließwege, Wandstärke und Fließgeschwindigkeit ebenso berechnen kann wie erforderliche Drücke durch Fließweglänge und Volumina der Einspritzmenge. Die Abkühlzeiten lassen sich ebenfalls aus den Wandstärken berechnen. Volumen und gegebenenfalls Materialinformationen erlauben zudem die Berechnung der einzuspritzenden Materialmenge bzw. des Aufdosiervolumens der Schnecke, usw.

Grundsätzlich besteht die Möglichkeit, durch Datentransfer oder auch durch den Bediener weitere Prozessparameter der Steuerung 11 vorzugeben, die für den Spritzgießprozess relevant sind, wie z.B. Druck, Temperatur, Menge an Material, Geschwindigkeit, Position, Zeit, Kernzugaktivität, Ausformen bzw. Ausstoßen des Spritzteils, Öffnungswege oder -geschwindigkeiten der Formschließeinheit F oder anderer einzelner Komponenten der Spritzgießmaschine oder von Peripheriegeräten P. Diese Informationen können der Steuerung 11 bereits bekannt sein oder durch interaktiven Kontakt mit dem Bediener im Schritt 103 abgefragt werden. Solche Informationen ergeben sich nicht allein aus der Bauteilgeometrie, können aber den Herstellungsprozess so beeinflussen, dass sie für einen stabilen Prozessablauf vorliegen sollten.

Im weiteren Ablauf kann die Maschine bei der Herstellung von Spritzteilen 13 wiederum weitere Informationen über das Spritzteil erhalten und diese verwenden, um die einmal getroffene Ureinstellung weiter zu optimieren. Es erfolgt also ein Iterationsprozess auf der Basis der bereit stehenden Informationen an den Formteilassistenten FTA der Steuerung 11 durch die Schritte:
- Berechnen der Spritzgießparameter durch den Formteilassistenten als Anlagen- und Prozessparameter ohne Simulation des Bauteils,
- Prüfen auf Plausibilität der berechneten Parameter mittels des Formteilassistenten FTA, ob das Bauteil mit den vorgegebenen Informationen als Spritzteil 13 auf der Maschine 10 herzustellen ist,
- falls die Plausibilitätsprüfung ergibt, dass das Spritzteil 13 so nicht herzustellen ist, wird der Bediener interaktiv kontaktiert, um weitere Informationen zu erhalten.
Diese Informationen können nach Einstellung der Ureinstellung und der Fertigung erster Spritzteile auch weitere Informationen von der Maschine sein, die dann unter Wiederholung der vorausgegangenen Schritte eine Optimierung ermöglichen. Sollten weitere Änderungen der Informationen nicht mehr möglich sein, wird der Bediener darüber informiert, dass das Spritzteil mit der zugehörigen Spritzgießmaschine nicht herstellbar ist. Ist es auf der Maschine herstellbar, wird die Maschine entsprechend betrieben. Eine offline-Simulation des Spritzteils ist nicht erforderlich.

Ergänzend können auch weitere Assistenten vorgesehen sein. Die Steuerung kann z.B. einen Spritzgießformassistenten SFA aufweisen, der Informationen über die Spritzgießform M verarbeitet. Hierzu können Geometrie, Aufbau und Eigenschaften der Spritzgießform M an den Spritzgießformassistenten SFA übergeben werden. Bei diesen Informationen kann es sich z.B. um den geometrischen Aufbau der Spritzgießform, um die Anzahl der Kavitäten, die Anordnung und Ausführung der Kühlkanäle oder auch um Informationen handeln, die den Öffnungsweg oder das Vorhandensein eventueller mechanischer Achsen im Werkzeug wie Kernzüge betreffen. Anhand der im Schritt 110 zur Verfügung gestellten Informationen über die Spritzgießform M werden dann im Schritt 111 Betriebsparameter durch den Spritzgießformassistenten SFA berechnet. Diese Betriebsparameter werden wiederum dem Formteilassistenten FTA zur Verfügung gestellt, der im Schritt 101 mit diesen zusätzlichen Informationen Anlagen- und Prozessparameter berechnet. Wie in den Schritten 101, 102, 103 in Fig. 2 dargestellt, kann auch hier eine Plausibilitätsprüfung gegebenenfalls unter interaktiver Kontaktaufnahme mit dem Bediener erfolgen, wobei vorzugsweise - wie in Fig. 2 nicht dargestellt - weitere Informationen auch Informationen die Spritzgießform M betreffend sein können und anhand dieser weiteren Informationen sowohl auf die Anlagen- und Prozessparameter als auch auf die Betriebsparameter Einfluss genommen werden kann. Je nach Ergebnis der Schritte 102 und 103 wird die Maschine zur Herstellung des Spritzteils 13 entsprechend betrieben oder der Bediener darüber informiert, dass das Spritzteil 13 auf dieser Maschine so nicht herstellbar ist.

Ferner kann der Steuerung ein Qualitätsassistent QA zugeordnet sein, wobei der Steuerung 11 dann die geforderten Qualitätsmerkmale des herzustellenden Spritzteils 13 mit den zugehörigen Toleranzbereichen an Information zu Verfügung gestellt werden. Auch hier kann durch einen interaktiven Kontakt mit dem Bediener weitere Information abgefragt werden. Der Qualitätsassistent QA beeinflusst anhand dieser Vorgaben die Anlagen- und Prozessparameter und/oder die Betriebsparameterfür eine Stabilitätsoptimierung der Prozessabläufe, dies ist in den Schritten 120 und 121 dargestellt.

Sämtliche Assistenten, d.h. der Formteilassistent FTA, der Spritzgießformassistent SFA und der Qualitätsassistent QA haben grundsätzlich Einfluss auf den Spritzgießprozess, wobei sie auf den gesamten Spritzgießprozess oder Teile davon Einfluss nehmen können. Ebenso können sie nur einen Teil der Komponenten der Spritzgießmaschine 10 und der Peripheriegeräte P beeinflussen. Zudem kann auch das Spritzteil 13 virtuell in Teile zerlegt werden, wobei der Einfluss der einzelnen Assistenten auf die Abschnitte des Bauteils unterschiedlich sein können. Ziel ist der Erhalt eines Prozessablaufes und einer Anlagenparametrierung, der schwerpunktmäßig durch die Kenntnis der Geometrie des herzustellenden Teils in Verbindung mit dem in der Steuerung vorliegenden Expertenwissen und Modellrechnern E bestimmt ist und nicht durch das Fachwissen des Bedieners. Dadurch ergibt sich ein von der bisherigen Vorgehensweise abweichender Ablauf beim Einstellen der Maschine, denn Startpunkt ist das Spritzteil 13 mit seinen geforderten Eigenschaften, das die Maschine kennenlernt und anhand dessen mit ihren Assistenten in der Steuerung 11 entscheidet, wie dieses als Spritzteil hergestellt werden soll.

Innerhalb der Steuerung 11 sorgt z.B. der Spritzgießformassistent SFA dafür, dass anhand der Werkzeuggeometrie der Grundablauf des Spritzgießprozesses berechnet und parametriert wird. Denkbar ist ergänzend der Einsatz von Fließsimulationen, die anhand der Geometrie des Spritzteils 13 zusammen mit Materialkenndaten Prozesssollprofile in Bezug auf Geschwindigkeit, Druck und Temperatur berechnen und auf die Spritzgießmaschine 10 abstimmen. Der Qualitätsassistent QA nutzt Qualitätsmodelle, die aus der Geometrie des Spritzteils 13 oder anderen Qualitätsmerkmalen, wie z.B. Festigkeit oder Lunker und den zugehörigen Toleranzvergaben eine Stabilisierungsoptimierung der Prozesseinstellungen vornehmen.

Durch das Vorhandensein von Bauteil-, Werkzeug- und Qualitätsdaten, z.B. aus der Werkzeugkonstruktion oder dem Bauteillastenheft als Ausgangspunkt für die verschiedenen Assistenten reduzieren sich im Idealfall die Entscheidungen des Bedieners auf einfache Ja/Nein-Eingaben an der Mensch-Maschine Schnittstelle I, während das Fachwissen von der Steuerung 11 vorgehalten und vorausgewählt präsentiert wird.

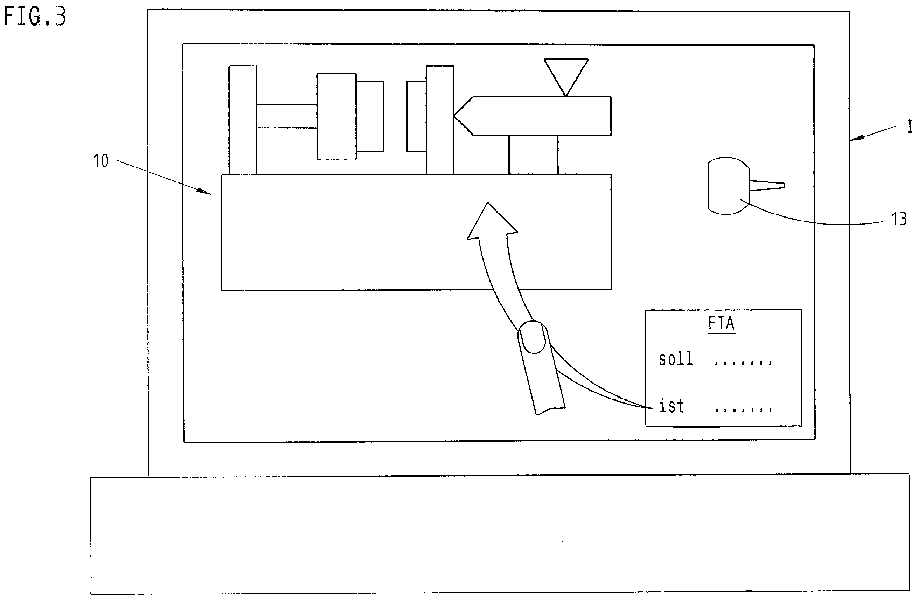

Grundsätzlich können die Vorschläge, welche sich durch die verfahrensgemäße Bearbeitung ergeben, auch anlagenspezifisch dem Bediener zurückgespiegelt werden. Über die Mensch-Maschine-Schnittstelle I kann, wie schematisch in Fig. 3 dargestellt für den Bediener z.B. die Verbindung zum Maschinenbild bzw. bildlich zu den Komponenten der Maschine hergestellt werden. So können die nach der Erarbeitung der Anlagen- und Prozessparameter sowie der Betriebsparameter noch sinnvoll an der Maschine einsetzbaren Komponenten für den Bediener zur Auswahl und anschließenden ggf. noch weiteren Parametrierung angeboten werden, indem der Formteilassistent FTA z.B. bestimmte Sollwerte anbietet. Die Auswahl kann dann z.B. dadurch erfolgen, dass die Komponenten z.B. durch eine Gestik angenommen oder abgelehnt werden. Dabei prüft die Steuerung im Hintergrund, ob diese Handlungen für die Herstellung des Spritzteils 13 sinnvoll sind. Die bildhafte Darstellung führt in Verbindung mit der intuitiven Gestik mit einem direkten Hinweis auf Bildbestandteile zu einer besseren Bedienbarkeit. Als Ergebnis der Arbeit der Postprozessoren oder Assistenten werden dem Bediener auf einer Mensch-Maschine Schnittstelle I die hardwaremäßigen Auswahl-Möglichkeiten an der Maschine angeboten, die er durch Gestik hinzufügen kann und dann bedarfsweise weiter parametrieren kann.

## Patentansprüche

1. Verfahren zum Betreiben einer Maschine zur Verarbeitung von Kunststoffen und anderer plastifizierbarer Materialien wie pulverförmige und/oder keramische Massen, wobei die Maschine aufweist,
- eine Formöffnungs- und -schließeinheit (F) zum Öffnen und Schließen einer Spritzgießform (M) mit wenigstens einem Formhohlraum (12) zur Herstellung eines der Form des Formhohlraumes entsprechenden Spritzteils (13),
- eine Spritzgießeinheit (S) mit Mitteln zum Plastifizieren und zum Einspritzen des plastifizierbaren Materials in den Formhohlraum (12),
- eine Steuerung (11) der Maschine, in der ein Expertenwissen (E) über den Betrieb der Spritzgießmaschine und ihre eventuell vorhandenen Peripheriegeräte (P) sowie über die Herstellung von Spritzteilen (13) in der Spritzgießtechnik vorhanden ist, um ein Spritzteil (13) unter bedarfsweise interaktivem Kontakt mit einem Bediener an Hand von Spritzgießparametern herzustellen,
umfassend die Schritte:
- Bereitstellen von Informationen über eine Geometrie für ein Spritzteil (13) oder des Formhohlraums (12) in Form von 3D Daten als CAD-Datensatz an einen Formteilassistenten (FTA) innerhalb der Steuerung (11),
- Berechnen von für die Herstellung des Spritzteils (13) erforderlichen Anlagen- und Prozessparametern als Spritzgießparameter durch den Formteilassistenten (FTA) an der Maschine vor der erstmaligen Fertigung eines Spritzteils und ohne vorherige offline-Simulation des Spritzteils,
- Prüfen auf Plausibilität der berechneten Anlagen- und Prozessparameter mittels des Formteilassistenten (FTA), ob ein Spritzteil (13) mit den vorgegebenen Informationen auf der Maschine (10) herzustellen ist,
- falls die Plausibilitätsprüfung ergibt, dass das Spritzteil (13) so nicht herzustellen ist, interaktive Kontaktaufnahme mit dem Bediener zum Erhalt weiterer Informationen, die eine Herstellung des Spritzteils (13) unter Änderung der Anlagen- und Prozessparameter ermöglicht und Wiederholen der letzten beiden Schritte,
- falls eine Änderung der Informationen nicht möglich ist, Mitteilen an den Bediener durch den Formteilassistenten (FTA), dass das Spritzteil (13) mit der zugeordneten Spritzgießmaschine (10) nicht herstellbar ist,
- falls die Plausibilitätsprüfung ergibt, dass das Spritzteil (13) herstellbar ist, Betreiben der Spritzgießmaschine (10) mit den berechneten Anlagen- und Prozessparametern zur Herstellung des Spritzteils (13).

2. Verfahren nach Anspruch 1, **dadurch gekennzeichnet, dass** die Steuerung (11) bei der Herstellung von Spritzteilen (13) Parameter über das Spritzteil als weitere Informationen erfasst und damit das Verfahren iteriert.

3. Verfahren nach Anspruch 1 oder 2, **dadurch gekennzeichnet, dass** der Steuerung (11) das zu verarbeitende Material vorgegeben wird oder vom Bediener das zu verarbeitende Material aus einer vorhandenen, der Steuerung (11) bekannten Auswahl an Materialien ausgewählt wird, und dass das zu verarbeitende Material als Information zur Berechnung der Anlagen- und Prozessparameter verwendet wird.

4. Verfahren nach einem der vorhergehenden Ansprüche, **dadurch gekennzeichnet, dass** die Daten der Angussgeometrie am Spritzteil als Information bereitgestellt werden.

5. Verfahren nach einem der vorhergehenden Ansprüche, **dadurch gekennzeichnet, dass** Einstellparameter für den Spritzgießprozess wie Druck, Temperatur, Menge an Material, Geschwindigkeit, Position, Zeit, Kernzugaktivitäten, Ausformen bzw. Ausstoßen des Spritzteils, Öffnungswege oder -geschwindigkeiten einzelner Komponenten der Spritzgießmaschine oder von Peripheriegeräten als Information zur Verfügung gestellt oder durch interaktiven Kontakt mit dem Bediener von der Steuerung (11) abgefragt werden.

6. Verfahren nach einem der vorhergehenden Ansprüche, **dadurch gekennzeichnet, dass** die Steuerung (11) einen Spritzgießformassistenten (SFA) aufweist, wobei das Verfahren die weiteren Schritte aufweist:
- Bereitstellen der Geometrie, des Aufbaus und der Eigenschaften der Spritzgießform (M) an den Spritzgießformassistenten (SFA),
- Berechnen der Betriebsparameter und der Anlagen- und Prozessparameter für den Betrieb der Spritzgießform (M) zur Herstellung des Spritzteils (13) auf der Spritzgießmaschine (10) unter Berücksichtigung der vorzugsweise vom Formteilassistenten (FTA) berechneten Anlagen- und Prozessparameter,
- Prüfen auf Plausibilität der berechneten Anlagen- und Prozessparameter mittels des Formteilassistenten (FTA) und/oder des Spritzgießformassistenten (SFA), ob ein Spritzteil (13) mit den vorgegebenen Informationen auf der Spritzgießmaschine (10) als Spritzteil (13) herzustellen ist,
- falls die Plausibilitätsprüfung ergibt, dass das Spritzteil (13) so nicht herzustellen ist, interaktive Kontaktaufnahme mit dem Bediener zum Erhalt weiterer Informationen, die eine Herstellung als Spritzteil (13) unter Änderung der Anlagen- und Prozessparameter und/oder Betriebsparameter ermöglicht und Wiederholen der letzten beiden Schritte,
- falls eine Änderung der Informationen nicht möglich ist, Mitteilen dem Bediener durch den Formteilassistenten(FTA), dass das Spritzteil (13) auf der Spritzgießmaschine (10) nicht herstellbar ist,
- falls die Plausibilitätsprüfung ergibt, dass das Spritzteil (13) herstellbar ist, Betreiben der Spritzgießmaschine (10) mit den berechneten Anlagen- und Prozessparametern und Betriebsparametern zur Herstellung des Spritzteils (13).

7. Verfahren nach einem der vorhergehenden Ansprüche, **dadurch gekennzeichnet, dass** die Steuerung (11) einen Qualitätsassistenten (QA) aufweist, wobei der Steuerung (11) die geforderten Qualitätsmerkmale des Bauteils als herzustellendes Spritzteil (13) und der zugehörigen Toleranzen als Information zur Verfügung gestellt oder durch interaktiven Kontakt mit dem Bediener von der Steuerung (11) abgefragt werden, und dass der Qualitätsassistent (QA) an Hand dieser Vorgaben die Anlagenparametrierung und zu berechnende Qualitätsmerkmalsmodelle mit entsprechenden Überwachungstoleranzen für die Anlagenmessgrößen bestimmt und/oder die Betriebsparameter für eine Qualitätsüberwachung bzw. Stabilitätsoptimierung beeinflusst.

8. Verfahren nach einem der vorhergehenden Ansprüche, **dadurch gekennzeichnet, dass** Formteilassistent (FTA) und/oder Spritzgießformassistent (SFA) und/oder Qualitätsassistent (QA) auf den Spritzgießprozess, ganz oder teilweise, und/oder auf alle oder nur einen Teil der Komponenten der Spritzgießmaschine (10) und der Peripheriegeräte (P) und/oder auf einen Teil des oder das gesamte Spritzteil (13) anwendbar sind.

9. Verfahren nach einem der vorhergehenden Ansprüche, **dadurch gekennzeichnet, dass** die Ergebnisse der Bestimmung der Anlagen- und Prozessparameter und/oder der Betriebsparameter dem Bediener über die Mensch-Maschine-Schnittstelle (I) visuell zur Auswahl und weiteren Bearbeitung bereitgestellt werden.

10. Verfahren nach Anspruch 9, **dadurch gekennzeichnet, dass** die Auswahl durch Gesten des Bedieners erfolgt, während die Steuerung die Auswahl des Bedieners auf Plausibilität prüft.

## Claims

1. A method for operating a machine for processing plastics and other plasticisable materials such as pulverulent and/or ceramic compositions, the machine comprising,
- a mould opening and closing unit (F) for opening and closing an injection mould (M) having at least one mould cavity (12) for manufacturing an injection moulding (13) corresponding to a shape of the at least one mould cavity,
- an injection moulding unit (S) having means for plasticising and injecting the plasticisable material into the mould cavity (12),
- a controller (11) of the machine which controller contains expert knowledge (E) about operation of the injection moulding machine and any present peripheral devices (P) thereof and about manufacture of injection mouldings (13) using injection moulding technology, in order to manufacture an injection moulding (13) with reference to injection moulding parameters with, if necessary, interactive contact with an operator,
comprising the steps:
- providing information about a geometry for the injection moulding (13) or of the mould cavity (12) in the form of 3D data as a CAD data set to a moulding assistant (FTA) within the controller (11),
- calculating, by means of the moulding assistant (FTA) at the machine, plant and process parameters required for manufacturing the injection moulding (13) as injection moulding parameters before an injection moulding is produced for the first time and without prior offline simulation of the injection moulding,
- testing of the plausibility of the calculated plant and process parameters by means of the moulding assistant (FTA), as to whether, using the information provided, an injection moulding (13) can be manufactured on the machine (10),
- if plausibility testing reveals that the injection moulding (13) cannot be manufactured in this manner, establishing interactive contact with the operator to obtain further information which enables manufacture of the injection moulding (13) with modification of the plant and process parameters, and repeating the last two steps,
- if modification of the information is not possible, notifying the operator by means of the moulding assistant (FTA) that the injection moulding (13) is not manufacturable using this injection moulding machine (10),
- if plausibility testing reveals that the injection moulding (13) is manufacturable, operating the injection moulding machine (10) using the calculated plant and process parameters for manufacturing the injection moulding (13).

2. A method according to claim 1, **characterised in that**, during manufacture of injection mouldings (13), the controller (11) acquires parameters about a manufactured injection moulding as further information and thus iterates the method.

3. A method according to claim 1 or 2, **characterised in that** a material to be processed is specified to the controller (11) or a material to be processed is selected by the operator from an existing selection of materials known to the controller (11), and **in that** the material to be processed is used as information for calculating the plant and process parameters.

4. A method according to one of the preceding claims, **characterised in that** a gate geometry data on the injection moulding are provided as information.

5. A method according to one of the preceding claims, **characterised in that** setting parameters for the injection moulding process such as pressure, temperature, quantity of material, speed, position, time, core pulling activities, demoulding or ejection of the injection moulding, opening paths or speeds of individual components of the injection moulding machine or of peripheral devices are provided as information or requested by the controller (11) by interactive contact with the operator.

6. A method according to one of the preceding claims, **characterised in that** the controller (11) comprises an injection mould assistant (SFA), wherein the method comprises the further steps:
- providing geometry, structure and properties of the injection mould (M) to the injection mould assistant (SFA),
- calculating operating parameters and the plant and process parameters for operation of the injection mould (M) for manufacturing the injection moulding (13) on the injection moulding machine (10) taking account of the plant and process parameters calculated by the moulding assistant (FTA),
- testing of the plausibility of the calculated plant and process parameters by means of the moulding assistant (FTA) and/or the injection mould assistant (SFA), as to whether, using the information provided, an injection moulding (13) can be manufactured as an injection moulding (13) on the injection moulding machine (10),
- if plausibility testing reveals that the injection moulding (13) cannot be manufactured in this manner, establishing interactive contact with the operator to obtain further information which enables manufacture as an injection moulding (13) with modification of the plant and process parameters and/or the operating parameters, and repeating the last two steps,
- if modification of the information is not possible, notifying the operator by the moulding assistant (FTA) that the injection moulding (13) is not manufacturable on the injection moulding machine (10),
- if plausibility testing reveals that the injection moulding (13) is manufacturable, operating the injection moulding machine (10) using the calculated plant and process parameters and the operating parameters for manufacturing the injection moulding (13).

7. A method according to one of the preceding claims, **characterised in that** the controller (11) comprises a quality assistant (QA), wherein required quality features of the component as an injection moulding (13) to be manufactured and associated tolerances are provided to the controller (11) or requested by the controller (11) by interactive contact with the operator, and **in that**, on the basis of these specifications, the quality assistant (QA) determines plant parameterisation and quality feature models with corresponding monitoring tolerances which are to be calculated for plant measured variables and/or influences operating parameters for monitoring quality or optimising stability.

8. A method according to one of the preceding claims, **characterized in that** moulding assistant (FTA) and/or injection moulding assistant (SFA) and/or quality assistant (QA) are applicable to the injection moulding process, in whole or in part, and/or to all or only a part of the components of the injection moulding machine (10) and of the peripheral devices (P) and/or to a part or to the complete injection moulding.

9. A method according to one of the preceding claims, **characterised in that** results of determination of the plant and process parameters and/or of the operating parameters are provided visually to the operator via the human-machine interface (I) for selection and further processing.

10. A method according to one of the preceding claims, **characterised in that** selection is made by operator gestures, while the controller tests the plausibility of an operator's selection.

## Revendications

1. Procédé de commande d'une machine pour le traitement de matières plastiques et d'autres matériaux plastifiables comme des masses pulvérulentes et/ou céramiques, dans lequel la machine présente :
- une unité d'ouverture et de fermeture de moule (F) pour l'ouverture et la fermeture d'un moule de moulage par injection (M) avec au moins une cavité de moule (12) pour la fabrication d'une pièce moulée par injection (13) correspondant à la forme de la cavité de moule,
- une unité de moulage par injection (S) avec des moyens pour la plastification et pour l'injection du matériau plastifiable dans la cavité de moule (12),
- un dispositif de commande (11) de la machine, dans lequel se trouvent une expertise (E) sur le fonctionnement de la machine de moulage par injection et des éventuels appareils périphériques (P) qui l'accompagnent ainsi que sur la fabrication de pièces moulées par injection (13) dans la technique du moulage par injection, pour fabriquer une pièce moulée par injection (13) si nécessaire en contact avec un utilisateur à l'aide de paramètres de moulage par injection,
comprenant les étapes consistant à :
- mettre à disposition des informations sur une géométrie pour une pièce moulée par injection (13) ou sur la cavité de moule (12) sous la forme de données 3D en tant que set de données CAO pour un assistant de pièce moulée (FTA) à l'intérieur du dispositif de commande (11),
- calcul des paramètres nécessaires pour l'installation et opérationnels, pour la fabrication de la pièce moulée par injection (13) en tant que paramètres de moulage par injection à l'aide de l'assistant de pièce moulée (FTA) au niveau de la machine avant la première réalisation d'une pièce moulée par injection et sans simulation hors ligne préalable de la pièce moulée par injection,
- vérification de la plausibilité des paramètres de l'installation et opérationnels calculés au moyen de l'assistant de pièce moulée (FTA), pour voir si une pièce moulée (13) doit être fabriquée avec les informations prédéterminées sur la machine (10),
- si l'examen de plausibilité monter que la pièce moulée par injection (13) ne peut être fabriquée de cette manière, prise de contact interactive avec l'utilisateur pour l'obtention d'informations supplémentaires qui permettent une fabrication de la pièce moulée par injection (13) en modifiant les paramètres de l'installation et opérationnels et répétition des deux dernières étapes,
- si une modification des informations n'est pas possible, communication à l'utilisateur par l'intermédiaire de l'assistant de pièce moulée (FTA) que la pièce moulée par injection (13) n'est pas fabricable avec la machine de moulage par injection associée (10),
- si l'examen de plausibilité montre que la pièce moulée par injection (13) est fabricable, commande de la machine de moulage par injection (10) avec les paramètres d'installation et opérationnels calculés en vue de la fabrication de la pièce moulée par injection (13).

2. Procédé selon la revendication 1, **caractérisé en ce que** le dispositif de commande (11) définit lors de la fabrication de pièces moulées par injection (13) des paramètres concernant la pièce moulée par injection en tant qu'informations supplémentaires et procède ainsi à une itération du procédé.

3. Procédé selon la revendication 1 ou 2, **caractérisé en ce que** le matériau à traiter est communiqué à l'avance au dispositif de commande (11) ou le matériau à traiter est choisi par l'utilisateur à partir d'un choix de matériaux connus par le dispositif de commande (11) et **en ce que** le matériau à traiter est utilisé comme information pour le calcul des paramètres d'installation et opérationnels.

4. Procédé selon l'une des revendications précédentes, **caractérisé en ce que** les données de la géométrie d'Angus au niveau de la pièce moulée par injection sont mises à la disposition en tant qu'informations.

5. Procédé selon l'une des revendications précédentes, **caractérisé en ce que** des paramètres de réglage pour l'opération de moulage par injection, comme la pression, la température, la quantité de matériau, la vitesse, la position, le temps, les activités de retrait du noyau, le démoulage ainsi que l'éjection de la pièce moulée par injection, les manières ou vitesses d'ouverture des différents composants de la machine de moulage par injection ou des appareils périphériques sont mis à disposition en tant qu'information ou bien sont demandés par le dispositif de commande (11) par contact interactif avec l'utilisateur.

6. Procédé selon l'une des revendications précédentes, **caractérisé en ce que** le dispositif de commande (11) présente un assistant de moulage par injection (SFA), ce procédé comportant les étapes suivantes :
- mise de la géométrie, de la structure et des propriétés du moule de moulage par injection (M) à la disposition de l'assistant de moulage par injection (SFA),
- calcul des paramètres de fonctionnement et des paramètres d'installation et opérationnels pour le fonctionnement du moule de moulage par injection (M) pour la fabrication de la pièce moulée par injection (13) sur la machine de moulage par injection (10) en prenant en compte les paramètres d'installation et opérationnels calculés de préférence par l'assistant de pièce moulée (FTA),
- examen de la plausibilité des paramètres d'installation et opérationnels de l'assistant de pièce moulée (FTA) et/ou de l'assistant de moulage par injection (SFA), pour savoir si une pièce moulée par injection (13) doit être fabriquée en tant que pièce moulée par injection sur la machine de moulage par injection (10) avec les informations prédéterminées,
- si l'examen de plausibilité montre que la pièce moulée par injection (13) ne peut pas être fabriquée ainsi, prise de contact interactive avec l'utilisateur pour l'obtention d'informations supplémentaires qui permettent une fabrication de la pièce moulée par injection (13) en modifiant les paramètres d'installation et opérationnels et/ou les paramètres de fonctionnement, et répétition des deux dernières étapes,
- si une modification des informations n'est pas possible, communication à l'utilisateur par l'intermédiaire de l'assistant de pièce moulée (FTA) que la pièce moulée par injection ne peut pas être fabriquée sur la machine de moulage par injection,
- si l'examen de plausibilité montre que la pièce moulée par injection (13) est fabricable, commande de la machine de moulage par injection (10) avec les paramètres d'installation et opérationnels calculés et les paramètres de fonctionnement en vue de la fabrication de la pièce moulée par injection (13).

7. Procédé selon l'une des revendications précédentes, **caractérisé en ce que** le dispositif de commande (11) présente un assistant qualité (QA), les caractéristiques de qualité exigées de la pièce fabriquée en tant que pièce moulée par injection (13) à fabriquer et des tolérances associées étant mises à la disposition du dispositif du commande (11) en tant qu'informations ou demandées par contact interactif avec l'utilisateur par le dispositif de commande (11), et **en ce que** l'assistant qualité (QA) détermine à l'aide de ces données préalables le paramétrage de l'installation et les modèles de caractéristiques de qualité à calculer avec des tolérances de surveillance correspondantes pour les dimensions de l'installation et/ou influence les paramètres de fonctionnement pour une surveillance de la qualité ou optimisation de la stabilité.

8. Procédé selon l'une des revendications précédentes, **caractérisé en ce que** l'assistant de pièce moulée (FTA) et/ou l'assistant de moulage par injection (SFA) et/ou l'assistant qualité (QA) sont utilisables pour l'opération de moulage par injection, totalement ou en partie, et/ou pour tout ou seulement une partie des composants de la machine de moulage par injection (10) et des appareils périphériques (P) et/ou sur une partie ou la totalité de pièce moulée par injection (13).

9. Procédé selon l'une des revendications précédentes, **caractérisé en ce que** les résultats de la détermination des paramètres de l'installation et opérationnels et/ou les paramètres de fonctionnement sont mis à la disposition de l'utilisateur par l'intermédiaire de l'interface homme-machine (I) visuellement, en vue du choix et du traitement ultérieur.

10. Procédé selon la revendication 9, **caractérisé en ce que** le choix s'effectue par des gestes de l'utilisateur, pendant que le dispositif de commande vérifie la plausibilité du choix de l'utilisateur.
